# EUROPEAN PATENT APPLICATION

(11) **EP 3 327 268 A1**
(43) Date of publication of application: **30.05.2018**
(21) Application number: 15899128.1
(22) Date of filing: 24.07.2015
(51) Int. Cl.: F02B 47/02, F02C 3/30, F02M 25/03

(54) **INTERNAL COMBUSTION ENGINE USING WATER AS AUXILIARY POWER**

(71) Applicant: Chen, Chun-Ting, Kaohsiung City 807 (TW)
(72) Inventor: Chen, Chun-Ting, Kaohsiung City 807 (TW)
(74) Representative: Lang, Christian
(86) International application number: PCT/CN2015/000529
(87) International publication number: WO 2017/015775

(57) **Abstract**

An internal combustion engine using water as auxiliary power comprises an engine body (1) and a water spraying system (2). The water spraying system (2) includes a water spraying motor (22) and a water nozzle (21) connected to a water outlet of the water spraying motor (22). The water nozzle (21) includes an end disposed in a combustion chamber (11) of the engine body (1). Through use of the high temperature generated in the combustion chamber during operation of the engine body, atomized water absorbs high heat and evaporates into water vapor, with the volume immediately expanding more than 1700 times the original volume (the higher the temperature, the higher the volume expanding ratio), bringing a strong pressure as a propulsive force of the engine. The momentous gasification similar to explosion of the fuel generates an expanding high pressure power. The liquid water is used as a liquid fuel in a special environment to achieve new kinetic energy, such that the power outputted by the engine, including the main power (such as gas, hydrogen, gasoline, a fuel for jet planes, etc.) and the auxiliary power (water), provides a higher power output than conventional engines, reducing the waste of heat energy and providing a great contribution in green environmental protection.

## Description

### TECHNICAL FIELD

The present invention relates to an engine structure and, more particularly, to an internal combustion engine using water as auxiliary power.

### BACKGROUND TECHNIQUE

A turbojet engine is a type of turbine engine and is featured by using a high-pressure gas current produced from combustion of a fuel as the propulsive force, becoming a mechanical power. Since the turbojet engine uses a gas current as the propulsive force, it is generally used in high speed planes, such as fighter planes, civil aircrafts, etc.

And, a turbojet engine primarily draws air or a gas through an inlet into the turbojet engine. The air or gas is firstly subject to multiple compression by turbine blades, and the gas after high-pressure compression enters the combustion chamber to mix with a fuel (such as gas, hydrogen, gasoline, a fuel for jet planes, etc.) and is combusted. The resultant high-temperature high-pressure gas expands to do work, driving the turbine to actuate a compressor to operate. The hot exhaust gas passing through the turbine is ejected outward at a high speed to produce a propulsive force.

However, the designer of the present invention deems that such a turbojet engine will generate high heat during operation, but no one has ever thought of recycling and using the high heat, serving as auxiliary power for the turbojet engine, resulting in unnecessary waste of energy. Not only that, all internal engine systems have the same problem. Thus, the designer of the present invention deems that improvement to such a turbojet engine and all internal combustion engine systems for reusing the high heat is desired.

### SUMMARY OF THE INVENTION

In view of the deficiencies of the background technique, the designer of the present invention having many years' practical factory experience deems that a liquid absorbing high heat and turning into a gas will significantly expand in a high fold (the expansion is more than 1700 times when the temperature is above 600), and the generated steam pressure is sufficient to propel any object. Thus, the designer of the present invention conceives that if the high heat generated by the turbojet engine and all internal combustion engine systems is recycled and used, water can be heated into water vapor to generate extra kinetic energy, providing more propulsive force and power for the whole engine, serving as the auxiliary power of the engine and thereby achieving the purpose of saving energy.

Therefore, the designer of the present invention proposes use of water as the auxiliary power of the engine based on the physical and chemical properties of water, primarily related to an internal combustion engine using water as the auxiliary power, comprising:
an engine body and a water spraying system, with the water spraying system including a water spraying motor and a water nozzle connected to a water outlet of the water spraying motor, with the nozzle including an end disposed in a combustion chamber of the engine body.

The present invention is primarily the idea of recycling and using heat cooperating with the principle that water will evaporate into water vapor after continuous heating at high temperature and that the overall volume will expand into a high fold (at least 1700 times) of the original volume, using the generated high steam pressure as the kinetic energy, thereby designing the engine structure of the present invention.

In the present invention, a liquid fuel: "water" is injected into a special environment: a high-pressure high-temperature engine combustion chamber. Liquid water in a high-pressure atomized form is injected into a distal end of the engine combustion chamber. The atomized water absorbs a large quantity of high heat and immediately evaporates into water vapor, with the volume expanding at least 1700 times the original volume (not only that, the higher the temperature, the higher the volume expanding ratio), bringing a strong stream pressure as an auxiliary propulsive force of the engine. The momentous gasification similar to explosion of the fuel generates an expanding high pressure power. The liquid water is used as a liquid fuel in a special environment to achieve new kinetic energy, such that the power outputted by the engine, including the main power (such as gas, hydrogen, gasoline, a fuel for jet planes, etc.) and the auxiliary power (water), uses the same amount of fuel but provides a higher power output than conventional engines, reducing the waste of heat energy and providing a great contribution in green environmental protection.

### DESCRIPTION OF THE ACCOMPANYING DRAWINGS

Figure 1 is a diagrammatic view of the present invention;
Figure 2 is a diagrammatic view of a gas flow of the present invention;
Figure 3 is a diagrammatic view of another embodiment of the invention;
Figure 4 is a diagrammatic view of a further embodiment of the present invention.

### Description of reference numbers:

1 - engine body; 11 - combustion chamber; 2 - water spraying system; 21 - water nozzle; 22 - water spraying motor.

### DETAILED DESCRIPTION

The structure, features, and embodiments of the present invention will be described in connection with the drawings to assist the Examiner in having a better understanding of the present invention.

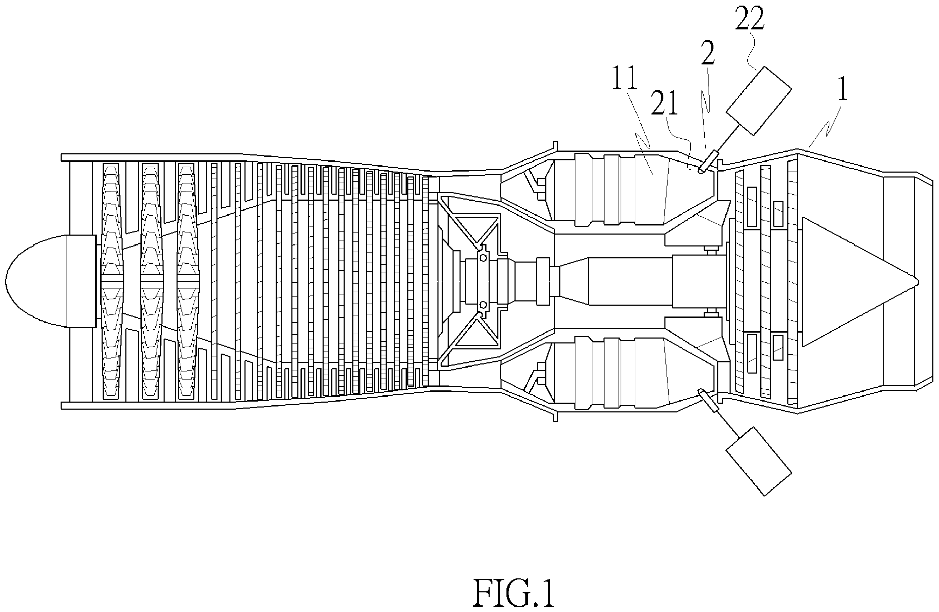

Please refer to FIG. 1. The present invention relates to an internal combustion engine using water as auxiliary power, comprising:

### An engine body 1:

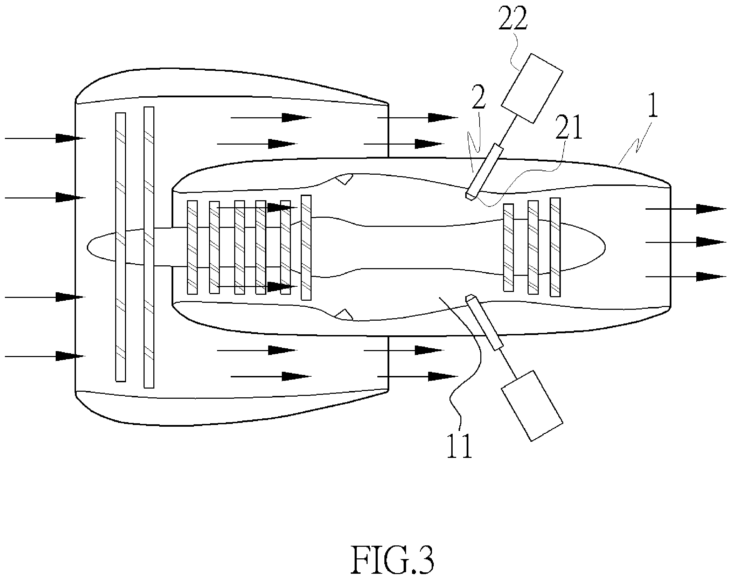

Please refer to Figure 1. The engine body 1 referred to in this specification is not limited to a turbojet engine or an internal combustion engine of a reciprocating piston type. The engine body 1 referred to in this specification can be any internal combustion engine system using a combusted gas during operation. Furthermore, the turbojet engine is not limited to the type shown in Figure 1, it may be a turbojet engine shown in Figure 3.

### A water spraying system 2:

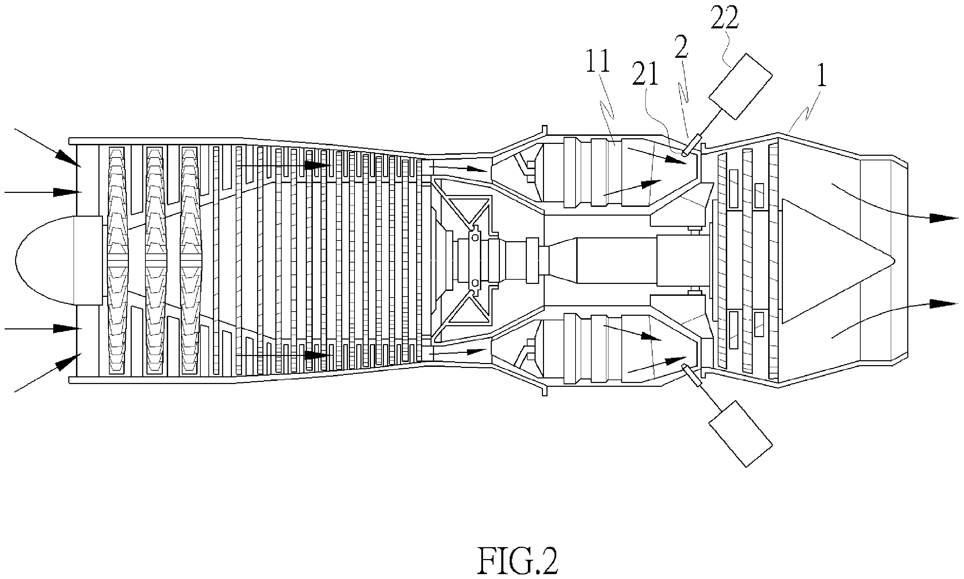

Please refer to Figure 1 and further to Figure 2. The water spraying system 2 includes a water spraying motor 22 and a water nozzle 21. The water nozzle 21 includes an end connected to the water spraying motor 22 and another end disposed in the combustion chamber 11 of the engine body 1.

The following is based an example of the engine body 1 that is a turbojet engine to describe the advantages and features of the invention:
In the present invention, a liquid fuel: "water" is injected into a special environment: "a high-pressure high-temperature engine combustion chamber". When the turbojet engine operates, ambient low pressure gas is sucked in and compressed by a compressor to continuously compress the low pressure gas into high pressure gas which enters the combustion chamber 11. At this time, a fuel (such as gas, hydrogen, gasoline, a fuel for jet planes, etc.) is filled into the combustion chamber 11 and undergoes the ignition/combustion stroke. The fuel explodes and generates high pressure and high temperature at the same time. Then, liquid water at the water nozzle 21 in a high-pressure atomized form is injected into a distal end of the combustion chamber 11. The high temperature and high pressure resulting from the explosion of the fuel are used, permitting the atomized water to absorb a large quantity of high heat and to immediately evaporate, and the volume expands more than 1700 times the original volume (not only that, the higher the temperature, the higher the volume expanding ratio). The momentous gasification similar to explosion of the fuel generates an expanding high pressure power. The liquid water is used as a liquid fuel in a special environment to serve as auxiliary power, such that the power outputted by the engine, including the main power (gasoline) and the auxiliary power (water), uses the same amount of fuel but provides a higher power output than conventional engines, reducing the waste of heat energy and providing a great contribution in green environmental protection.

Furthermore, the above water spraying system 2 preferably injects water into the combustion chamber 11 in an atomized form. The water nozzle 21 is preferably mounted to a rear half portion (namely, adjacent to the exhaust pipe of the engine body 1) of the combustion chamber 11, such that the atomized water can more completely absorb the high heat generated during combustion of the fuel, obtaining a better expansion effect to produce larger kinetic energy and propulsive force.

Furthermore, an impeller and a transmission mechanism can further be mounted to an outer side of an outlet of the combustion chamber 11. By connecting the impeller to the transmission mechanism, the gas discharged from the combustion chamber 11 drives the transmission mechanism via the impeller, and then the transmission mechanism drives another element, serving as auxiliary power.

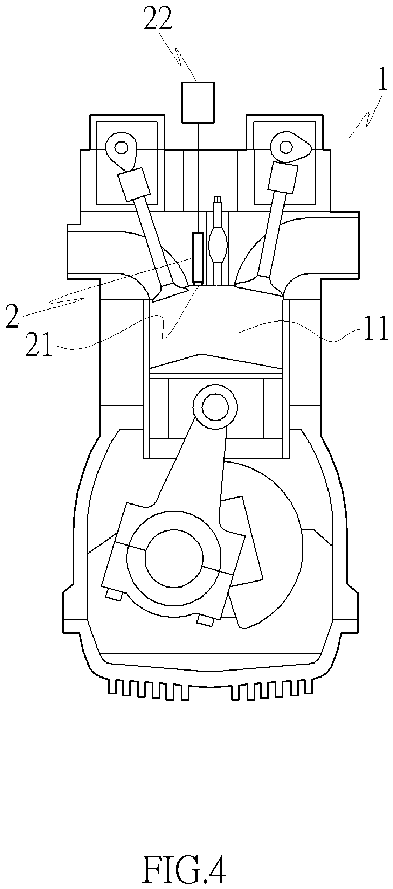

Please refer to FIG. 4. The engine body 1 of the present invention can be a reciprocating piston type engine. In this embodiment, the water nozzle 21 of the water spraying system 2 is mounted in the combustion chamber 11 and is preferably located at a top wall of the combustion chamber 11. Thus, when the engine body 1 proceeds to the ignition/explosion stroke making the temperature in the combustion chamber 11 reach the highest point; namely, a better timing is selected between the ignition/combustion stroke and the exhaust stroke), at this time, the water nozzle 21 injects the atomized water into the combustion chamber 11. The other operational principles, features, and advantages have already been set forth hereinbefore and, thus, will not be redundantly described here.

In view of the foregoing, the present invention does meet the requirement of industrial applicability, is not published or in public use before application and nor known to the public, and has non-obviousness, fulfilling the requirements of patentability. A patent application is, therefore, filed in accordance with the law.

Nevertheless, the above description is merely a preferred embodiment of the present invention in the industry. All equivalent variations of the embodiment of the present invention still fall within the scope of protection sought by this case.

## Claims

1. An internal combustion engine using water as auxiliary power, **characterized in** comprising:
an engine body and a water spraying system, with the water spraying system including a water spraying motor and a water nozzle connected to a water outlet of the water spraying motor, with the water nozzle including an end disposed in a combustion chamber of the engine body.

2. The internal combustion engine using water as the auxiliary power as claimed in claim 1, **characterized in that** the engine body is a jet engine.

3. The internal combustion engine using water as the auxiliary power as claimed in claim 1, **characterized in that** a half portion of the combustion chamber adjacent to an exhaust pipe of the engine body is defined as a rear half portion, the water nozzle is mounted to the rear half portion of the combustion chamber and ejects atomized water.

4. The internal combustion engine using water as the auxiliary power as claimed in claim 1, **characterized in that** the engine body is a reciprocating piston type engine, the water nozzle is mounted to a top wall of the combustion chamber, the water nozzle is used to eject atomized water into the combustion chamber.
